# EUROPEAN PATENT SPECIFICATION

(11) **EP 2 076 701 B1**
(45) Date of publication and mention of the grant of the patent: **15.08.2012**
(21) Application number: 07825325.9
(22) Date of filing: 08.10.2007
(51) Int. Cl.: F16K 17/28, F16K 17/30

(54) **SAFETY GAS DISTRIBUTION SYSTEM**
SICHERHEITSGASVERTEILSYSTEM
SYSTÈME DE DISTRIBUTION DE GAZ DE SÉCURITÉ

(30) Priority: 09.10.2006 IT PD20060373
(43) Date of publication of application: 08.07.2009
(73) Proprietor: Eurostandard S.p.a., 38038 Tesero (TN) (IT)
(72) Inventor: ZENI, Marisa, I-38033 Cavalese (IT); FONTANAZZI, Giuseppe, I-38033 Cavalese (IT); BOZZOLI, Alessandro, I-38050 (IT); CICOLINI, Guido, I-38020 Rabbi (IT); ZANETTI, Alberto, I-38050 Telve (IT)
(74) Representative: Gallo, Luca
(86) International application number: PCT/IB2007/003015
(87) International publication number: WO 2008/044126

(56) References cited:
- WO-A-97/09552
- US-A- 3 703 913
- US-A- 5 613 518
- US-A1- 2002 162 595

## Description

### Field of application

The present invention relates to a safety gas distribution system.

The system in question, as described in the preamble of Claim 1, is intended to convey the gas to the users by means of a distribution network consisting of at least one main line and a plurality of secondary lines connected to the main line and to the users.

More particularly, the invention falls within the industrial sector relating to the production of gas distribution systems equipped with safety devices for safeguarding the users against gas leaks.

For this purpose such safety devices are mounted inside the secondary lines so as to intercept automatically the gas flow in the event of leaks which may arise in the said secondary lines following faults or breakages.

In normal operating conditions, the pressure inside the gas distribution networks is substantially at the same value. Therefore, in the range of throughputs for which the secondary lines are designed, the pressure inside the main line is the same as that inside the secondary lines which are branched off the main line.

The intercepting device is usually mounted in the proximity of the connection between the secondary line and the main line so as to intervene in the event of any fault occurring in the secondary line.

In normal operating conditions, the device assumes a preset open position, where it allows the free flow of the gas from the main line to the secondary line.

When, instead, in the secondary line downstream of the section in which the safety device is inserted, there is a significant and sudden variation in the pressure of the gas due to a breakage of the pipe which forms the secondary line, the device subject to this pressure difference moves into a preset closed position, where it interrupts the gas through-flow or reduces it to levels which are not dangerous.

### Background art

At present, numerous systems equipped with safety devices aimed at minimizing the risk of gas leakages due to faults in the secondary line are known.

One of the most common causes of a gas leak is damage to the secondary lines caused during excavation work, in particular for the laying or maintenance of sewers, hydraulic or electric installations, etc.

In the past, poorly executed work inside buildings or improper use of the user facilities have also been the cause of faults which have resulted in gas leaks with the consequent intervention of the safety devices, when present.

In operational terms, the safety device closes automatically in a fraction of a second when, following damage, the pressure inside the secondary line falls below a predetermined value.

Typically for example, the gas flow is interrupted by the device, in the case where the secondary line has a fault which results in a leakage section with a size equal to at least 5-15% of its cross-section.

Generally speaking, the safety devices are housed inside a portion of the secondary line situated between an electrically weldable coupler and the main line or situated between two electrically weldable couplers.

In greater detail, usually the safety devices are formed by a normally tubular shaped main body which defines internally a chamber which houses internally an obturator able to slide coaxially inside the chamber.

Sliding of the obturator occurs between an open position, where the obturator allows the through-flow of the gas during normal operation of the network, and a closed position, where the obturator, in the event of a fault, makes contact with a stop surface formed in the chamber in order to interrupt the gas flow.

Resilient means are provided so as to act on the obturator in order to keep it in the open position during the normal working condition.

A loss of gas from the secondary line results in a difference in pressure acting on the obturator which, overcoming the force exerted on the said obturator by the resilient means, causes the device to pass from the open position into the closed position.

These resilient means generally consist of a metallic spring, the reactive force of which allows definition of a safety threshold which, when reached, causes closing of the device following an unexpected loss of gas.

Calculation of the safety threshold or the force to be exerted by the spring must take into account the actual operating conditions of the device, with compressible fluids and non-stationary flows, which modify the theoretical calculation parameters, using suitable corrective factors.

Some devices which are widespread in the market, of the type briefly mentioned above, are described in detail for example in the patents EP 686795, US 4590962, US 4010770 and WO 0188420.

In more detail, the devices considered in the patents US 4590962 and US 4010770 are intended to be installed in lines with a relatively small diameter and are mounted in an interruption along the line, by means of threads provided at the end of the main body.

The device described in the patent US 4010770 envisages the use of a ball as a obturator for interrupting the gas flow and one or more metallic springs for adjusting the position of the ball.

Differently, the device described in the patent WO 0188420 is situated inside a portion of the secondary line to which it is constrained by means of an external seal which acts in a sealing manner on the inner surface of the line itself.

More particularly, this latter device is provided with a hollow obturator having a portion with a substantially cylindrical shape which faces the inner wall of the main body, and a head portion with a rounded shape connected continuously to the cylindrical portion and provided with a seal able to act in a sealing manner on the stop surface of the main body.

The stop surface is formed by means of a restriction of the internal cross-section.

The flow of the gas through the device during the normal operation of the network is ensured by a hole formed in the rounded portion of the obturator over the entire cross-section of the chamber.

The spring is arranged between two shoulders, one of which is formed at the base of the cylindrical portion of the obturator and the other in the wall of the chamber of the main body.

The patent EP 0686795 describes a safety device which envisages the use of a rigid body inside which a cone-shaped chamber is provided and which has a restriction at one end. The device is provided with an ogival obturator having a diameter greater than the restriction of the chamber and able to slide inside the rigid body against the force of a spring, so as to bear against the restriction of the housing.

Closest prior art document US-A-5613518 discloses a valve comprising a unitary injection molded tubular body having a bore in which an annular valve seat and a spring support shoulder are formed. A poppet valve member is positioned within the bore and is biased away from the valve seat by a compression spring. The inlet section of the tubular body has a plurality of longitudinally extending arms forming longitudinally extending fluid passageways therebetween to provide bypasses around the poppet valve member when the poppet valve member is in its open position. A bleed passageway can be provided for automatic reset of the device.

All the devices of the known type mentioned above and other similar devices have the drawback that they consist of a plurality of different components which involve a significant constructional complexity and a high risk of errors during assembly.

The constructional complexity negatively affects moreover the production costs which are particularly high.

In general, for example owing to the impurities present in the fluid conveyed, and depending on the various materials with which the safety device is made, the working life of the said device could be impaired.

In greater detail, the devices of the known art usually use metallic components, such as the spring, the piston, the adjusting screws, which are subject to oxidation which with time may result in deviations of their mechanical characteristics from the nominal values, negatively affecting correct operation (response time and operating safety) of the safety devices.

Document US -A- 2002/0162595 discloses a check valve comprising a valve plate having an inlet hole that draws in a low pressure fluid by an open-and-shut operation driven by a piston movement, and a discharging hole that discharges a high pressure fluid through an open-close operation. The document discloses also a check valve shaped in a helical plate spring structure coupled with the inlet hole and discharging hole of the valve plate.

Document WO-A-9709552 concerns a valve comprising a circular frame whose inner edge narrows to form flexible areas connecting the frame to triangular vanes. The areas form articulations about which the vanes pivot when the valve opens or closes. In the closed position, the vanes bear against one another and the assembly adopts a pyramidal position. The valve can be produced by the injection of plastics. The entire valve may be produced in a single part.

### Disclosure of the invention

The main object of the present invention is therefore to overcome the drawbacks of the solutions of the prior art described above, providing a safety gas distribution system which is convenient owing to the use of safety devices which are inexpensive to produce.

Another object of the present invention is to provide a gas distribution system which is equipped with safety devices for intercepting the gas flow in the event of leaks and functioning of which is simple and operationally entirely reliable.

Another object of the present invention is to provide a gas distribution system with safety devices which can be used for secondary and main lines having diameters also greater than those of the lines in which the safety devices of the known type are currently installed.

A further object of the present invention is to provide gas distribution systems with safety devices able to allow easy resetting of the operative condition following switching of the devices from the closed position into the open position.

A further object of the present invention is to provide a gas distribution system in which the mechanical and operational characteristics of the safety devices remain unchanged over time.

These objects, together with others, are all achieved by the safety gas distribution system according to Claim 1, which comprises: at least one main supply line, at least one secondary line branched off the main line and supplied by the latter with a gas flow; at least one safety device arranged inside the secondary line in order to intercept the gas flow in the event of leaks downstream of its insertion position in the line, the device having an intercepting body provided with a fixed portion, which is rigidly constrained to the inner surface of the secondary line, and a closing portion.

According to the present invention the system is characterized in that said closing portion forms one piece with said fixed portion and shaped so as to be deformed resiliently between an open configuration, where it frees the gas flow path from the main line to the secondary line, and a closed configuration, which is automatically assumed when there is a drop in pressure in the secondary line, where it interferes with the gas flow path, interrupting or reducing the flow thereof;
said fixed portion being provided with a ring which can be constrained peripherally to the inner surface of said secondary line and which is connected by means of its inner edge to said closing portion, said ring being provided with a foot extending from its outer edge and arranged in a parallel manner facing the inner surface of the secondary line so as to constrain said intercepting body to the inner surface of said secondary line,
said closing portion being formed by one or more petals connected centrally together and by means of a resiliently flexible portion to the fixed portion;
said fixed portion being provided with one or more openings able to be at least partly closed by said petals with the closing portion in said closed configuration, and being spaced from said petals, with the closing portion in said open configuration.

### Brief description of the drawings

The technical features of the invention, in accordance with the abovementioned objects, may be clearly determined from the contents of the claims indicated below and the advantages thereof will emerge more clearly from the detailed description which follows, provided with reference to the accompanying drawings, which show some purely exemplary and non-limiting embodiments thereof, where:

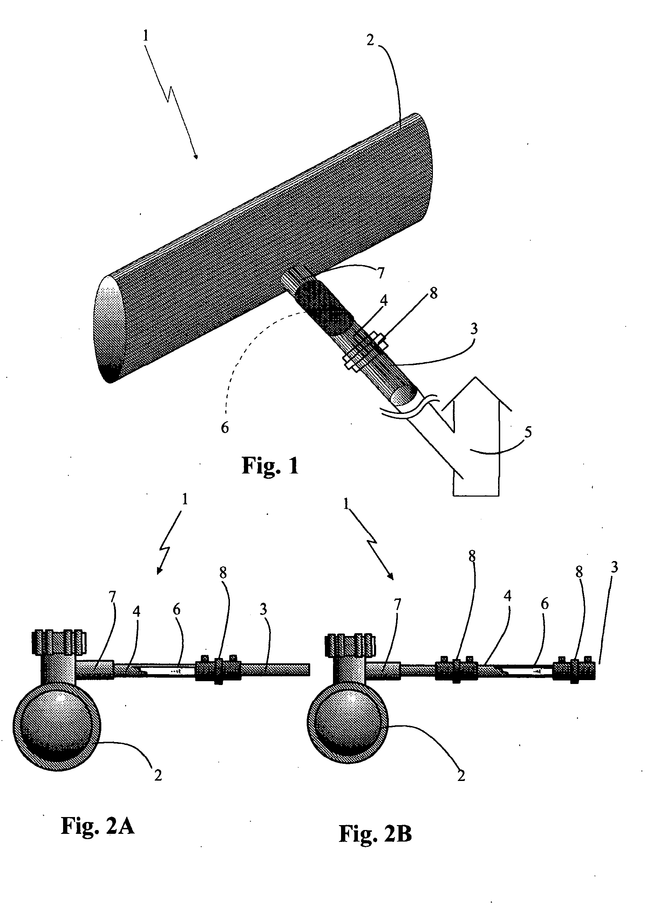

**FIG. 1** shows schematically an example of a gas distribution system according to the present invention comprising a network shown by way of example in the form of a main line and a secondary line, and a safety device associated with the secondary line;
**FIGS. 2A and 2B** show schematically two gas distribution systems according to the invention with the safety device situated in two different positions;
**FIGS. 3A, 3B** show two different views of a detail of the system, relating to a first example of the safety device, which does not form part of the invention and does not fall within the scope of the claims;
**FIG. 4** shows a second example of a safety device of the system according to the invention;
**FIG. 5** shows a third example of the safety device of the system according to the invention.

### Detailed description of some preferred examples of embodiment

With reference to the attached drawings, 1 denotes in its entirety the gas distribution system according to the present invention.

This system 1 is composed, in an entirely general manner, of a distribution network formed by at least one main line 2 from which a plurality of secondary lines 3 (only one of which has been shown) are branched off, said lines being intended to convey gas to the user facilities, generally consisting of dwellings, schematically denoted by 5.

More generally the expression "secondary line" must be understood below as meaning a line which is branched off downstream of another line situated upstream and called for example "main line".

The system 1 also comprises a safety device 6, which is arranged inside the secondary line 3 in order to intercept the gas flow in the event of leaks which may occur downstream of its insertion position in the said line 3.

Preferably, the device 6 is inserted in a portion 4 of the secondary line 3, which is situated between a branch 7 of the main line and an electrically weldable coupler 8, from where the secondary line 3 for supplying the user facility 5 departs.

Alternatively, the portion 4 of the secondary line 3 may be situated between two electrically weldable couplers 8.

In greater detail, the device 6 in accordance with the idea forming the basis of the present invention has an intercepting body 9 provided with a fixed portion 10, which is rigidly constrained to the inner surface 11 of the secondary line 3, and a closing portion 12 forming one piece with the fixed portion 10.

The closing portion 12 is shaped so as to be deformed resiliently between an open configuration 13, where it frees the gas flow path from the main line 2 to the secondary line 3, and a closed configuration 14, where it interferes with the gas flow path, interrupting or reducing the flow thereof.

This latter configuration 14 is assumed automatically when there is a drop in pressure in the secondary line 3.

The gas flow, which is indicated by an arrow in the accompanying figures, allows the definition in the secondary line 3 of an upstream section M and section V downstream of the intercepting body 9, in relation to which sections a difference in pressure is created following the occurrence of a fault in the secondary line 3.

Within the lines 2, 3, during normal operation of the distribution network, the gas has substantially the same pressure both in the main line 2 and in the secondary lines 3 namely upstream M and downstream V of the intercepting body 9.

Operationally speaking, in the event of breakage of a secondary line 3 there is a sudden variation between the pressure present inside the main line 2 and that present in the abovementioned secondary line 3. This variation in pressure produces, as will be explained more clearly below, a force F which is proportional to the drop in pressure Δp and which causes deformation of the closing portion 12 with switching from the open configuration into the closed configuration 14.

Advantageously, the fixed portion 10 and closing portion 12 are manufactured as one piece, thus making it possible to produce the intercepting body 9 preferably by means of an injection-moulding process, in particular using plastic.

In more detail, the fixed portion 10 is made in the form of a disk or a ring, which has an outer edge 15, which can be constrained to the inner surface of the secondary line 3, and an inner edge 16 to which the closing portion 12 is connected.

A support foot 17 extends perpendicularly from the outer edge 15 of the ring and is arranged in a parallel manner facing the inner surface 11 of the secondary line 3. This support foot 17 extends preferably along the entire circumference of the ring so as to form a cylindrical bush which can be easily fixed to the secondary line 3, for example by means of a seal 18 mounted in a suitable seat formed annularly on its outer surface.

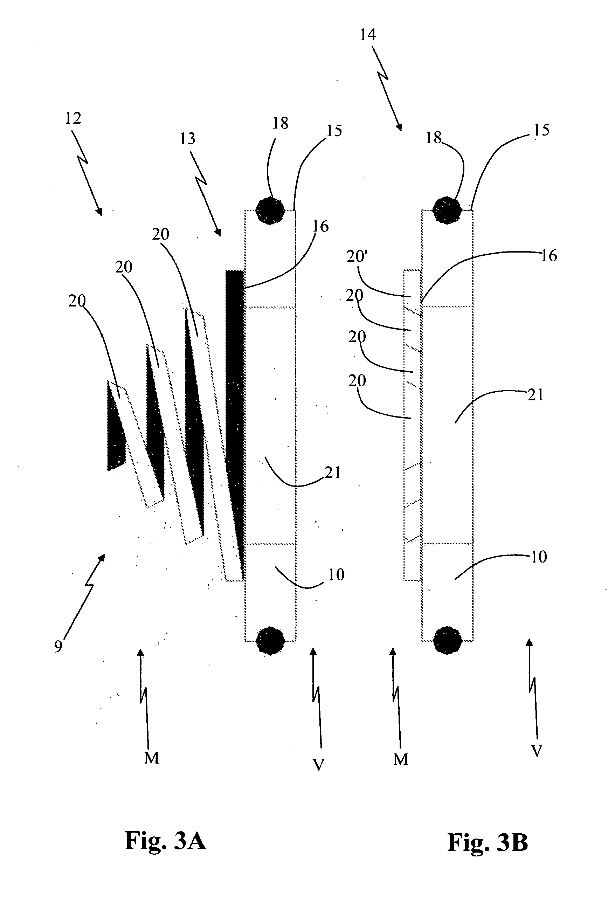

In accordance with a first embodiment, shown in Figures 3A and 3B, the closing portion 12 is shaped in the form of a spiral.

This embodiment does not form part of the invention, does not fall within the scope of the claims and merely represents an example which is useful for understanding the invention.

Operationally speaking, when a breakage occurs in a pipe which results in significant losses in the secondary line 3, the pressure in the section V downstream of the closing body 10 diminishes suddenly and a pressure difference is created with respect to the upstream section M, which produces a force F proportional to the pressure drop Δp. This force F acts on the closing portion 12, deforming it and causing it to assume the closed configuration 14 shown in Figure 3B, where the turns 20 of the spiral are arranged so that their contours perimetrally form a seal with respect to each other, thus obstructing the secondary line 3 and therefore interrupting the gas supply to the users 5.

Instead, when the normal operating condition is restored, the pressure difference Δp, and together with it the force F produced on the turns 20, is eliminated, the turns therefore assuming the open configuration 13 shown in Figure 3A, expanding along the axis of the spiral so as to allow the gas to pass through towards the users 5.

Therefore, the turns 20 are automatically able to compress and extend resiliently in the direction of the axis of the spiral so as to cause switching of the closing portion 12 between the closed configuration 14 and the open configuration 13.

A part or only one end of the first turn 20' of the spiral is connected as one piece continuously to the ring which forms the fixed portion 10, and in particular along its inner edge 16.

This ring has a central through-hole 21 and is provided externally with a seat inside which the seal 18 is inserted for fixing to the inner surface of the line 3.

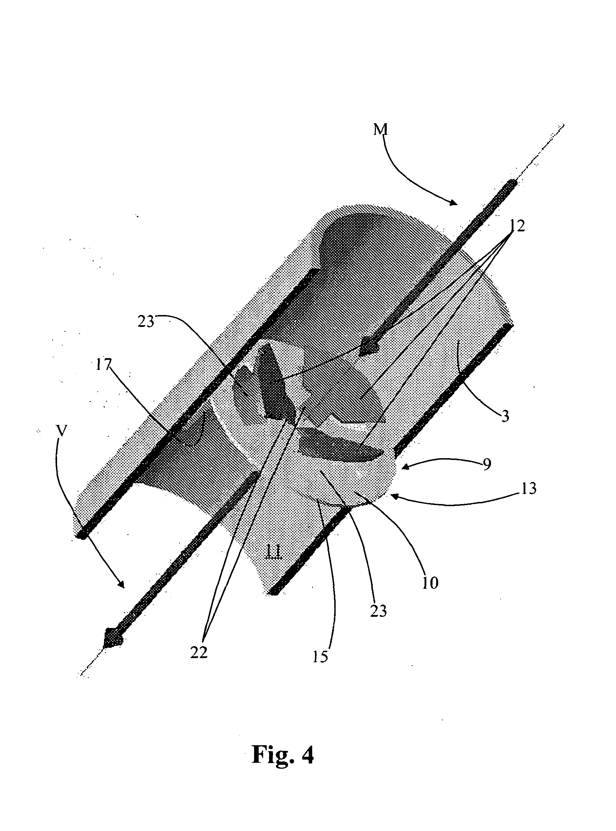

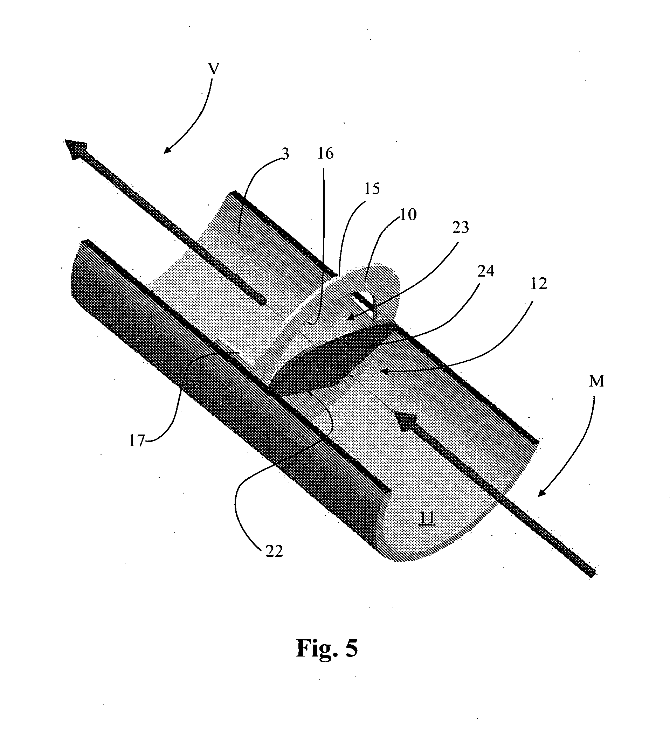

In accordance with a second embodiment, that differently from the one forms part of the present invention, the closing portion 12 is formed by one petal (Figure 5) or several petals 24 (Figure 4) and by a resiliently flexible portion 22 able to connect continuously the petals 24 to the fixed portion 10.

Openings 23 are provided in the fixed portion 12, situated opposite the positions of the petals 24 and able to be closed by the latter following their displacement into the closed configuration 14.

Preferably the openings 23 have a shape matching the shape of the petals 24.

The deformation of the resiliently flexible portion 22 allows the petals to obstruct the openings 23 and assume the closed configuration 14. Owing to the resilience of the resiliently flexible portion 22 the open configuration 13 may be restored once the fault in the secondary line 3 has been repaired and correct operation of the gas distribution network has been restored.

In the case of this second example of embodiment also, the fixed portion 10 is ring or disk shaped depending on the form or number of petals 24.

In the example according to Figure 4 each petal 24 is formed by a flat leaf provided with a stem connected centrally to the fixed disk-shaped portion by means of a short side which may form the resiliently flexible portion 22, which otherwise may occupy only a small connecting portion along the short side.

In the case of the example according to Figure 5 where a single petal 24 and a single corresponding opening 23 have been envisaged, the flexible connecting portion 22 extends from the inner edge of the ring which forms the fixed portion 10.

Numerous variations in the form of the petals 24, the openings 23 or the fixed portion 10 may be envisaged, all of these falling within the scope defined by the present invention.

The flexible connecting portion 22 has been indicated only ideally as forming part of the closing portion 12 rather than the fixed portion 10, since the two portions, i.e. fixed portion 10 and closing portion 12, are advantageously obtained by means of a single moulding forming one piece.

This flexible connecting portion 22 will be shaped along the profile and/or cross-section so as to provide the said petal(s) with the desired resilience. For example the stem mentioned above may have a thickness or width suitable for allowing the petals to move so as to close or open the openings 23.

Preferably, the petals remain flat and do not play a part in the resilient deformation of the closing portion 12, which is performed by the flexible connecting portion 22 alone.

Preferably, the closing portion 12, namely the petals 24 or the turns 20, may define a seal which is not complete in its closed configuration 14, and instead allows a secondary, very small, but not dangerous gas flow to pass through.

Owing to this secondary flow, once the fault has been repaired, the secondary line 3 may reach the pressure of the main line 2 so as to allow the closing portion 12 to assume again the open configuration 13 and thus restore correct operation of the network.

Owing to the particular constructional feature of the intercepting body which is formed as one piece, it is possible to simplify significantly the production process and avoid the drawbacks of the known designs which require complex assembly steps.

Owing to the particular design of the intercepting body which is formed for example by means of injection-moulding of plastic (or the like), it is possible moreover to overcome the problems of a variation in the design characteristics of the device due to the use, in the solutions of the known type, of metallic materials for the construction of certain components including springs, screws, and retaining and fixing means.

The invention thus conceived therefore achieves the predefined objects.

## Claims

1. Safety gas distribution system, which comprises: at least one main supply line (2); at least one secondary line (3) branched off said main line and supplied by the latter with a gas flow; at least one safety device (6) arranged inside the secondary line (3) in order to intercept the gas flow in the event of leaks downstream of its insertion position in the line, said device (6) having:
- an intercepting body (9) provided with a fixed portion (10), which is rigidly constrained to the inner surface (11) of said secondary line (3), and a closing portion (12),
**characterized in that** said closing portion (12) forms one piece with said fixed portion (10) and is shaped so as to be deformed resiliently between an open configuration (13), where it frees the gas flow path from said main line (2) to said secondary line (3), and a closed configuration (14), which is automatically assumed when there is a drop in pressure in said secondary line (3), where it interferes with the gas flow path, interrupting or reducing the flow thereof,
said fixed portion (10) being provided with a ring which can be constrained peripherally to the inner surface (11) of said secondary line (3) and which is connected by means of its inner edge (16) to said closing portion (12), said ring being provided with a foot (17) extending from its outer edge (15) and arranged in a parallel manner facing the inner surface (11) of the secondary line (3) so as to constrain said intercepting body to the inner surface of said secondary line (3),
said closing portion (12) being formed by one or more petals (24) connected centrally together and by means of a resiliently flexible portion (22) to the fixed portion (10);
said fixed portion (10) being provided with one or more openings (23) able to be at least partly closed by said petals (24) with the closing portion (12) in said closed configuration (14), and being spaced from said petals (24), with the closing portion (12) in said open configuration (13).

2. System according to Claim 1, **characterized in that** said fixed portion (10) and closing portion (12) of said intercepting body (9) are formed as one piece in particular by means of injection moulding, in particular using plastic.

3. System according to Claim 1, **characterized in that** said foot (17) extends circumferentially from the outer edge (15) of the ring forming a cylindrical bush which faces the inner surface (11) of said secondary line (3) and which, in particular, is provided externally with a seal (18) so as to constrain the intercepting body (9) to the inner surface (11) of said secondary line (3).

4. System according to Claim 1, **characterized in that** said openings (23) are shaped so as to match substantially said petals (24).

5. System according to Claim 1, **characterized in that** said at least one petal (24) is formed by a flat leaf having at least one short side connected to said fixed portion (10).

6. System according to Claim 1, **characterized in that** each said petal (24) has a flexible connecting portion (22) which connects it continuously to said fixed portion (10).

7. System according to Claim 6, **characterized in that** said flexible connecting portion (22) is shaped along the profile and/or cross-section so as to provide said closing portion (12) with the desired resilience for assuming the abovementioned open and closed configurations (14, 13).

8. System according to any one of the preceding claims, **characterized in that** said closing portion (12) and said fixed portion (10) define an opening for allowing a reduced gas flow to pass through when said closing portion (12) is in the closed configuration (14).

## Patentansprüche

1. Anlage zum sicheren Verteilen von Gas, die Folgendes umfasst: mindestens eine Hauptversorgungsleitung (2); mindestens eine von dieser Hauptleitung abgezweigte und von dieser mit einem Gasstrom versorgte Nebenleitung (3); mindestens eine Sicherheitsvorrichtung (6), die in der Nebenleitung (3) angeordnet ist, um den Gasstrom im Falle von Lecks stromabwärts ihrer Position des Einbaus in die Leitung zu unterbrechen, wobei diese Vorrichtung (6) versehen ist:
- mit einem Absperrkörper (9), der mit einem festen Teil (10), der starr an der Innenfläche (11) der Nebenleitung (3) fixiert ist, und mit einem Verschlussteil (12) ausgestattet ist,
**dadurch gekennzeichnet, dass** der Verschlussteil (12) einen einzigen Körper mit dem festen Teil (10) bildet und geformt ist, um sich elastisch zwischen einer Öffnungskonfiguration (13), in der er den Gasdurchgang von der Hauptleitung (2) zur Nebenleitung (3) freigibt, und einer automatisch bei Vorliegen eines Druckabfalls in der Nebenleitung (3) angenommenen Schließkonfiguration (14) zu verformen, in der mit dem Durchgang des Gases interferiert und dessen Strom unterbricht oder vermindert, wobei dieser feste Teil (10) mit einem Ring versehen ist, der peripherisch an der Innenfläche (11) der Nebenleitung (3) fixiert werden kann und mit Hilfe seines Innenrands (16) mit dem Verschlussteil (12) verbunden ist, wobei dieser Ring mit einem Fuß (17) versehen ist, der sich vom Außenrand (15) erstreckt und der Innenfläche (11) der Nebenleitung (3) parallel gegenüberliegend angeordnet ist, um den Absperrkörper an der Innenfläche dieser Nebenleitung (3) zu fixieren,
wobei dieser Verschlussteil (12) von einem oder mehreren Blättern (24) gebildet wird, die mittig miteinander und durch einen elastisch biegsamen Abschnitt (22) mit dem festen Teil (10) verbunden sind;
wobei dieser feste Teil (10) mit einer oder mehreren Öffnungen (23) versehen ist, die zumindest teilweise von diesen Blättern (24) verschlossen werden können, wenn sich der Verschlussteil (12) in der Schließkonfiguration (14) befindet, und die von diesen Blättern (24) beabstandet sind, wenn sich der Verschlussteil (12) in der Öffnungskonfiguration (13) befindet.

2. Anlage nach Anspruch 1, **dadurch gekennzeichnet, dass** der feste Teil (10) und der Verschlussteil (12) des Absperrkörpers (9) als ein einziger Körper insbesondere durch Spritzgießen insbesondere aus Kunststoff ausgebildet sind.

3. Anlage nach Anspruch 1, **dadurch gekennzeichnet, dass** sich der Fuß (17) zirkumferenziell vom Außenrand (15) des Rings erstreckt und eine zylindrische Buchse bildet, die der Innenfläche (11) der Nebenleitung (3) gegenüberliegt und die insbesondere außen mit einer Dichtung (18) versehen ist, um den Absperrkörper (9) an der Innenfläche (11) der Nebenleitung (3) zu fixieren.

4. Anlage nach Anspruch 1, **dadurch gekennzeichnet, dass** die Öffnungen (23) im Wesentlichen gegenförmig zu den Blättern (24) ausgeformt sind.

5. Anlage nach Anspruch 1, **dadurch gekennzeichnet, dass** das mindestens eine Blatt (24) aus einer flachen Lamelle ausgebildet ist, die über mindestens eine kurze Seite verfügt, der mit dem festen Teil (10) verbunden ist.

6. Anlage nach Anspruch 1, **dadurch gekennzeichnet, dass** jedes Blatt (24) mit einem biegsamen Verbindungsabschnitt (22) versehen ist, der es ohne Unterbrechung mit dem festen Teil (10) verbindet.

7. Anlage nach Anspruch 6, **dadurch gekennzeichnet, dass** der biegsame Verbindungsabschnitt (22) im Profil und/oder im Querschnitt geformt ist, um dem Verschlussteil (12) die gewünschte Elastizität zu verleihen, um die oben genannten Öffnungs- und Schließkonfigurationen (14, 13) anzunehmen.

8. Anlage nach einem der vorherigen Ansprüche, **dadurch gekennzeichnet, dass** der Verschlussteil (12) und der feste Teil (10) eine Öffnung für den Durchgang eines verringerten Gasstroms definieren, wenn sich der Verschlussteil (12) in der Schließkonfiguration (14) befindet.

## Revendications

1. Installation pour la distribution de gaz, en condition de sécurité, qui comprend : au moins une conduite principale d'alimentation (2) ; au moins une conduite secondaire (3) en dérivation à partir de ladite conduite principale et alimentée par cette dernière avec un flux de gaz ; au moins un dispositif de sécurité (6) disposé à l'intérieur de la conduite secondaire (3) pour intercepter le flux de gaz en cas de fuite en aval de sa position d'insertion dans la conduite, ledit dispositif (6) est pourvu de :
- un corps d'interception (9) muni d'une portion fixe (10), assujettie rigidement à la surface interne (11) de ladite conduite secondaire (3), et d'une portion d'obturation (12),
**caractérisée en ce que** ladite portion d'obturation (12) forme un corps unique avec ladite portion fixe (10) et est profilée pour se déformer élastiquement entre une configuration d'ouverture (13), dans laquelle le passage de gaz de ladite conduite principale (2) à ladite conduite secondaire (3), et une configuration de fermeture (14), prise automatiquement en présence d'une baisse de pression de ladite conduite secondaire (3), dans laquelle elle interfère avec le passage de gaz en interrompant ou en réduisant son flux,
ladite portion fixe (10) étant munie d'un anneau pouvant être assujetti de manière périphérique à la surface interne (11) de ladite conduite secondaire (3) et relié par le biais de son bord interne (16) à ladite portion d'obturation (12), ledit anneau étant muni d'un pied (17) s'étendant à partir du bord externe (15) et disposé parallèlement, apposé contre, par rapport à la surface interne (11) de la conduite secondaire (3) pour assujettir ledit corps d'interception à la surface interne de ladite conduite secondaire (3),
ladite portion d'obturation (12) est formée d'un ou plusieurs pétales (24) reliés centralement entre eux et par l'intermédiaire d'une portion flexible élastiquement (22) à la portion fixe (10) ;
ladite portion fixe (10) étant pourvue d'une ou plusieurs ouvertures (23) susceptibles d'être au moins partiellement fermées par lesdits pétales (24) avec la portion d'obturation (12) dans ladite configuration de fermeture (14), et étant éloignés desdits pétales (24), avec la portion d'obturation (12) dans ladite configuration d'ouverture (13).

2. Installation selon la revendication 1, **caractérisée en ce que** lesdites portions fixe (10) et d'obturation (12) dudit corps d'interception (9) sont obtenues d'une seule pièce en particulier par moulage par injection, en particulier de matière plastique.

3. Installation selon la revendication 1, **caractérisée en ce que** ledit pied (17) s'étend de manière circonférentielle à partir du bord externe (15) de l'anneau en réalisant une bague cylindrique qui est apposée contre la surface interne (11) de ladite conduite secondaire (3) et qui, en particulier, est munie extérieurement d'un joint (18) pour assujettir le corps d'interception (9) à la surface interne (11) de ladite conduite secondaire (3).

4. Installation selon la revendication 1, **caractérisée en ce que** lesdites ouvertures (23) sont sensiblement contre-profilées par rapport auxdits pétales (24).

5. Installation selon la revendication 1, **caractérisée en ce que** ledit au moins un pétale (24) est formé par une lamelle plate pourvue d'au moins un côté court relié à ladite portion fixe (10).

6. Installation selon la revendication 1, **caractérisée en ce que** chaque dit pétale (24) est pourvu d'une portion de raccordement flexible (22) qui le raccorde sans solution de continuité à ladite portion fixe (10).

7. Installation selon les revendications 6, **caractérisée en ce que** ladite portion de raccordement flexible (22) est profilée dans le profil et/ou dans la section pour conférer à ladite portion d'obturation (12) l'élasticité désirée pour prendre les configurations d'ouverture et de fermeture (14, 13) précitées.

8. Installation selon l'une quelconque des revendication précédentes, **caractérisée en ce que** ladite portion d'obturation (12) et ladite portion fixe (10) définissent une ouverture pour le passage d'un flux réduit de gaz avec ladite portion d'obturation (12) dans ladite configuration de fermeture (14).
